Europäisches Patentamt

European Patent Office

Office européen des brevets

(19)

(11) **EP 0 474 237 B1**

(12) **EUROPEAN PATENT SPECIFICATION**

(45) Date of publication and mention
of the grant of the patent:
**20.03.1996 Bulletin 1996/12**

(51) Int Cl.6: **G02B 5/30**, G02B 5/04

(21) Application number: **91115031.6**

(22) Date of filing: **05.09.1991**

(54) **Prism optical device and polarizer using it**

Optische Prismenvorrichtung und diese verwendender Polarisator

Dispositif optique à prismes et polariseur l'utilisant

(84) Designated Contracting States:
**DE FR GB**

(30) Priority: **06.09.1990 JP 236448/90**

(43) Date of publication of application:
**11.03.1992 Bulletin 1992/11**

(73) Proprietor: **SEIKO EPSON CORPORATION**
**Shinjuku-ku Tokyo-to (JP)**

(72) Inventors:
• **Wu, Jin-Jei**
  **Suwa-shi, Nagano-ken (JP)**
• **Ito, Yoshitaka**
  **Suwa-shi, Nagano-ken (JP)**
• **Uchiyama, Shoichi**
  **Suwa-shi, Nagano-ken (JP)**
• **Sonehara, Tomio**
  **Suwa-shi, Nagano-ken (JP)**

(74) Representative:
**Hoffmann, Eckart, Dipl.-Ing. et al**
**Patentanwalt,**
**Bahnhofstrasse 103**
**D-82166 Gräfelfing (DE)**

(56) References cited:
EP-A- 0 040 033          DD-A- 152 212
US-A- 3 511 556          US-A- 3 914 018

**Description**

The present invention relates to a prism optical device and to a polarizer using it.

There are three types of conventionally used linear polarizers, namely (a) the absorption type, (b) the reflection type and (c) the refraction type. The absorption type polarizer, for instance a dichroic sheet polarizer, absorbs one component of unpolarized light and transmits another normal component. The reflection type polarizer, for example a polarizing beam splitter, reflects one component of unpolarized light and transmits another normal component. The refraction type polarizer, for example a light displacing prism, refracts one component of unpolarized light and transmits another normal component. In these polarizers, at least half of the unpolarized light energy is absorbed, reflected or refracted, so that the remaining light energy or light intensity transmitted through the polarizer is absolutely less than 50 % of the incident light intensity.

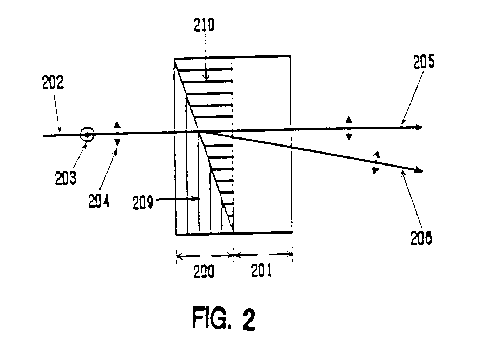

In order to improve the transmittance of a conventional polarizer, a sheet preliminary polarizer is suggested as shown in Fig. 2. (In Fig. 2 and throughout the other figures explained later, the following conventions will be used: hatched portions indicate birefringent material the hatching being in the direction of the optical crystal axis; the mark designated 203 in Fig. 2 indicates a polarization direction, i.e. the direction of oscillation of the light vector perpendicular to the plane of the drawing; and the mark designated 204 in Fig. 2 indicates a polarization direction parallel to the plane of the drawing). The preliminary polarizer of Fig. 2 comprises a light separating part 200 and a polarization rotating part 201. The light separating part 200 is composed of two edge prisms 209, 210 having their optical crystal axes perpendicular to each other. Unpolarized light 202 incident on the first prism 209 of the light separating part 200 in a direction normal to the layer surface may be assumed to include two components respectively having the polarization directions 203 and 204. The light separating part 200 separates this unpolarized light into the ordinary ray and the extraordinary ray whose polarization directions are perpendicular to each other. In the polarization rotating part 201 the polarization direction of the ordinary ray is rotated by 90° into the polarization direction of the extraordinary ray. Thus, two rays 205 and 206 having their polarization directions within the same plane leave the polarization rotating part 201.

This sheet preliminary polarizer has a high transparency and perfectly polarizes unpolarized light. In the case of normally incident monochromatic light, more than 50% of the incident light is transmitted which is better than with a conventional polarizer. However this preliminary polarizer also has a problem. The incident light transmitted through the sheet preliminary polarizer is divided into two light rays having a very small angle of divergence. When an object is seen through this sheet preliminary polarizer, two overlapped images will be observed.

The document DD-A-152 212 discloses a polarizing optical device for converting unpolarized light into linearly polarized light with high efficiency, the device comprising light separating means, polarization rotating means and a prism optical device serving as a combining means. The light separating means includes two edge prisms and outputs an ordinary ray and an extraordinary ray which are unparallel, namely perpendicular to each other. A mirror is used to reflect one of the two rays into a direction parallel to that of the other ray. The reflected ray passes a λ/2 plate serving to rotate the polarization plane of this ray into that of the other ray. This results in a first and a second ray having the same polarization direction which are parallel to each other though shifted with respect to each other. These two rays are incident on the prism optical device comprising two plane-parallel plates put together to form a V configuration. Both rays undergo a parallel shift towards each other to exit the prism optical device as a single beam of parallel, linearly polarized light.

The document EP-A-0 040 033 discloses a prism optical device used to separate an incident light beam into a first beam of ordinary rays and a second beam of extraordinary rays, the two beams exiting the device in parallel to each other but spaced from each other. A pair of anisotropic crystal prisms which are faced to each other is used in this device. The crystal prisms are composed of a crystal that has different refractive indices for ordinary rays and extraordinary rays.

The document US-A-3,511,556 discloses a Glan-Thompson-type polarizing prism formed of two edge prisms, one of them being made of an isotropic medium and the other of a birefringent medium. When the light is incident on the isotropic edge prism, the device functions as a Glan-Thompson-polarizer whereas, when light is passed in the opposite direction through the polarizer, it functions as a Rochon-prism.

It is an object of the present invention to provide a prism optical device which has a high transparency and is capable upon receiving two unparallel incident light rays to output two output light rays in parallel to each other.

It is a further object of the invention to provide a polarizing device using said prism optical device in order to obtain the advantages of the above explained preliminary polarizer without suffering from its disadvantage.

These objects are achieved with a prism optical device as claimed in claim 1.

A specific embodiment of the invention is the subject matter of dependent claim 2.

The prism optical device provided by the present invention can be used as light ray combining part to further improve the characteristics of a sheet preliminary polarizer according to Fig. 2 by adjusting the two output light rays of the polarizing rotating part into the same direction. The light ray combining part is required to have a high transmittance, so that the transmittance of the passing through all parts of the polarizer is substantially higher than that of a conventional polarizer.

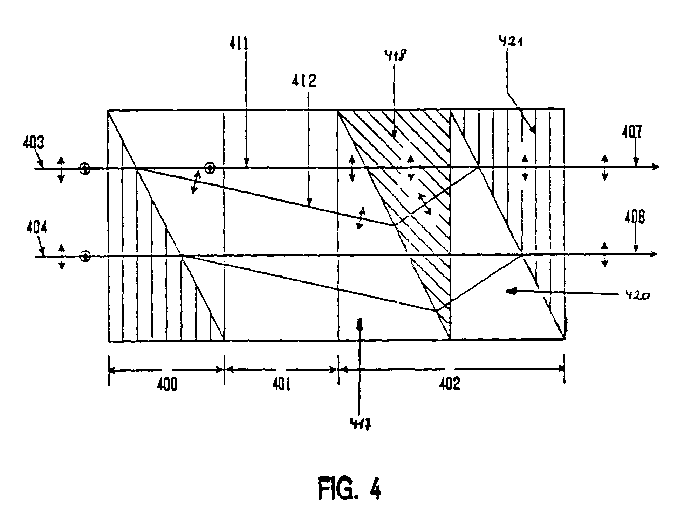

The light ray combining part of this invention can be used not only in combination with a preliminary polarizer, but also alone as an optical device in laser optics. To obtain laser light which has a high directivity and monochromaticity, a combining part according to the invention can be used to collect two diverging laser light beams into the same direction. The polarizer according to this invention has a utility for interferometry, optical information processing, integrated optics, fiber optics, etc. In fact, as shown in Fig. 4, using an accurately designed light ray combining part, the preliminary polarizer has become more similar to the real polarizer.

The advantages of the polarizer of this invention can be summarized as follows:

(1) Use of light energy can be economized. Since this kind of (preliminary) polarizer is formed of transparent isotropic material and birefringent material, the absorption of light energy is small enough that it can nearly be ignored. Moreover, the inter-layer refractive index is appropriately adjusted in the design process, so that the reflective coefficient is very small.

(2) Compared with a conventional dichroic polarizer, the polarizer according to the invention is suitable for high-power light sources. Since the polarizer of this invention has a low absorption coefficient, the amount of absorbed light energy is low enough not to generate heat that might affect the polarizer.

(3) Compared to the conventional polarizers the transmittance is improved. If a polarizer according to this invention is arranged in front of a conventional polarizer the total transmittance is improved compared with the case without the subject polarizer.

Embodiments of the invention will be explained in detail below with reference to the drawings, in which:

Fig. 1                          is a sectional view of a polarizer according to the invention which is formed of a multi-layer optical device comprising birefringent prisms,

Fig. 2                          shows a preliminary polarizer previously suggested by the same inventors,

Figs. 3(a) to (f)               show various embodiments of the light ray combining part,

Fig. 4                          is a sectional view of a completed polarizer and

Figs. 5 (a) to (c)              are sectional views of the light separating part, the polarization rotating part and the light ray combining part of a polarizer according to the invention.

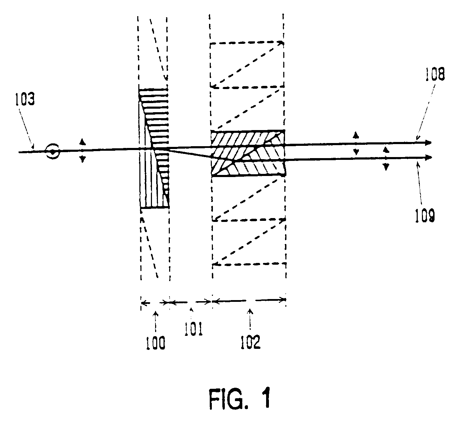

The polarizer according to the present invention is formed of a multi-layer optical device comprising highly birefringent prisms. The multi-layers can be separated into three parts according to their functions. Fig. 1 shows the structure. The first part is a light separating part 100 for separating incident light into the ordinary ray and the extraordinary ray. The second part is a polarization rotating part 101 for rotating the polarization direction of the extraordinary ray by 90° into the plane of the polarization direction of the ordinary ray. The third part is a light ray combining part 102 for combining the two light rays. In Fig. 1 103 designates the incident light, 108 is the transmitted light ray having its polarization direction rotated by 90° by means of the polarization rotating part 101, and 109 is the transmitted light ray slightly shifted in a direction parallel to that of the incident light.

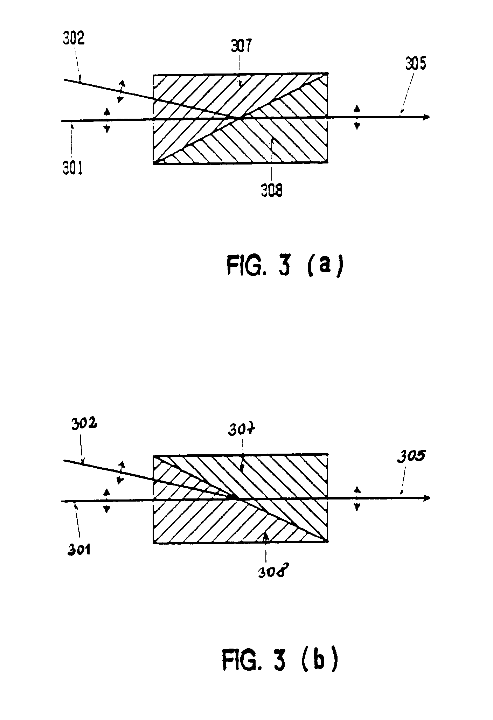

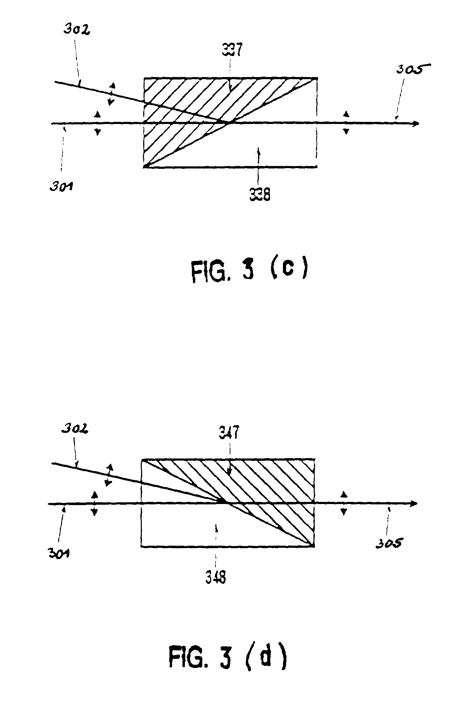

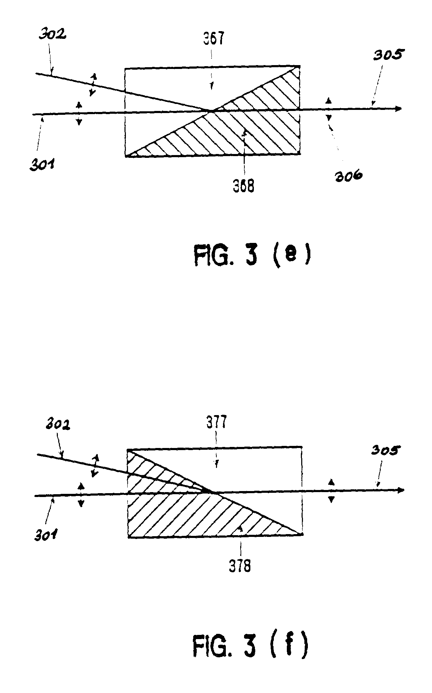

Reference is now made to Figs. 3(a) and (b) for a more detailed explanation of the light ray combining part which comprises two edge shape prisms 307, 308. As shown in Fig. 3(a) and (b) the optical crystal axes of the two prisms are perpendicular to each other. Under the influence of the birefringent characteristic of the crystal two light rays incident on the light ray combining part from different directions are respectively refracted by different refractive indices in the first prism, thereby having different polarization axes. By adjusting the optical crystal axis of the second prism it is possible to have the two light rays leaving the second prism in the same direction as indicated by 305.

The embodiments of the light ray combining part shown in Figs. 3(c) to (f) are each composed of a birefringent prism 337, 347, 367 and 377, respectively, and an isotropic prism 338, 348, 368 and 378, respectively. In all cases the two light rays are well combined.

As mentioned before, Fig. 1 shows a sectional view of a multi-layer polarizer according to the present invention comprising the light separating part, the polarization rotating part and the light ray combining part. If only the size of each element is so small that it cannot be recognized by an observer, when observing an object through this polarizer any paralax will be just as small that it will not be noticeable. Consequently, the image of an object observed through the polarizer will be clear and vivid.

Fig. 4 shows a sectional view of another embodiment of the polarizer comprising a light separating part 400, a polarization rotating part 401 and a light ray combining part 402. In this embodiment the light ray combining part 402 is composed of four edge prisms, namely a first isotropic prism 417, a second birefringent prism 418, a third isotropic prism 420 and a fourth birefringent prism 421. In Fig. 4, 403 and 404 are incident light beams. 411 and 412 are a first and a second light ray and 407 and 408 are the light rays transmitted through the polarizer. In the light ray combining part 402 the second ray 412 is deflected into the direction of the first ray 411, and the two separated rays are recombined into one ray 407, 408. The polarizer of Fig. 4 achieves a notably improved transmittance compared with conventional polarizers. However, comparing the light ray combining parts of Figs 3 and 4 the former is more practical considering the wavelength dependency and the complexity of the structure.

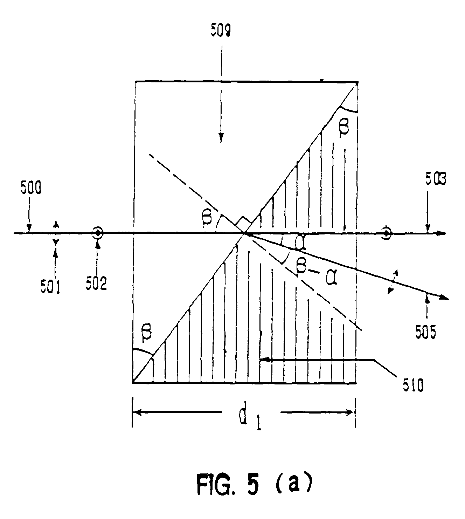

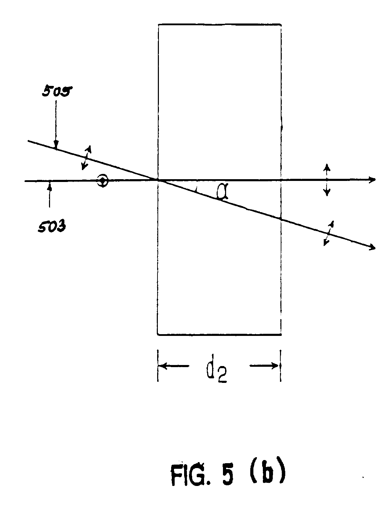

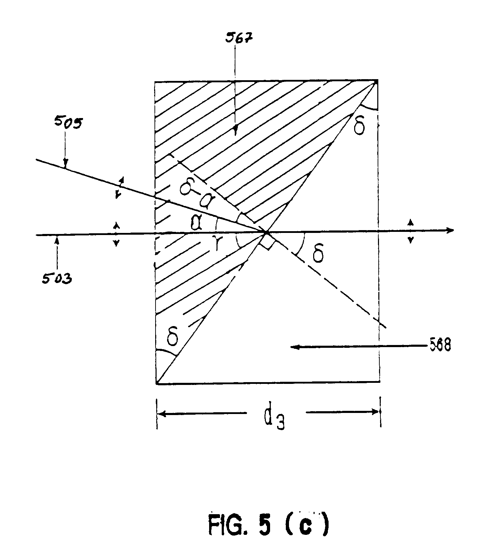

An embodiment of the present invention will now be described in detail below with reference to Figs. 5(a) to (c).

Fig. 5(a) shows a light separating part, Fig. 5(b) a polarization rotating part and Fig. 5(c) a light ray combining part.

As shown in Fig. 5(a) the light separating part comprises two edge prisms 509, 510 and has a layer thickness $d_1$. β designates the edge angle of the edge prisms. The first prism 509 is an isotropic prism whose refractive index is represented by $N_{O1}$. The second prism 510 is made from birefringent material and has a refractive index $N_{O1}$ for the ordinary ray and a refractive index $N_{e1}$ for the extraordinary ray. The optical crystal axis of this second prism is parallel to the layer surface (vertical in the figure). Unpolarized light 500 which is incident in a direction normal to the layer surface is represented by a combination of two light ray components.

As indicated, the polarization direction of the first component 501 is parallel to the plane of the drawing, whereas that of the second component 502 is perpendicular to the plane of the drawing. The light 500 incident into the prism is divided at the interface of the two edge prisms and the two rays, namely the ordinary ray corresponding to first component 501 and the extraordinary ray corresponding to the second component 502. The refractive index for the ordinary ray does not change at the interface of the two prisms and so the propagation direction of this ray is not changed either. Thus, the incident first component 501 goes straight through and leaves the light separating part as a first ray 503. The refractive index for the extraordinary ray changes at the interface of the two prisms, and its propagation direction is deflected by an angle α. Therefore, the incident second component 502 is deflected at the interface of the two prisms and leaves the light separating part as a second beam 505. α is the angle of divergence between the two rays 503 and 505.

Fig. 5(b) shows the polarization rotating part whose layer thickness is $d_2$. The first ray 503 and the second ray 505 from the light separating part enter into the polarization rotating part. In order to simplify the designing process the refractive indices of the three parts, i.e. separating, rotating and combining parts, are so adjusted, that the angle α is fixed. The layer thickness $d_2$ and ΔN which is the difference between the refractive index for the ordinary ray and that for the extraordinary ray are appropriately adjusted so that the polarization rotating part acts as a λ/2 plate for the first ray 503 but as an integer wave plate for the second ray 505, which generates a phase difference of an integral number times the wave length. The refractive index for the ordinary ray and for the extraordinary ray are $N_{O2}$ and $N_{e2}$, respectively.

In the light ray combining part of Fig. 5(c), the first prism 567 is formed of a birefringent material with a refractive index for the ordinary ray being $N_{O3}$ and that for the extraordinary ray $N_{e3}$. The second prism 568 is formed of an isotropic material having the refractive index $N_L$. Assuming the definitions given before and δ to represent the edge angle of the prisms in Fig. 5(c) and γ the angle of the optical crystal axis with respect to the normal on the layer surface, NL can be expressed as

$$N_L = N_{O3} N_{e3} / \sqrt{N_{e3}^2 \cos^2 \alpha + N_{O3}^2 \sin^2 \alpha}.$$

In designing the polarizer, design values are calculated in the order for (1) the polarization rotating part, (2) the light separating part and (3) the light ray combining part.

(1) Polarization rotating part

As mentioned before, the polarization rotating part of Fig. 5(b) serves as a λ/2 plate for the first ray 503 and as an integer wave plate for the second ray 505. The following relations are obtained in consideration of the optical path length of each ray.

$$\Delta N d_2 = (M + 1/2) \lambda : \text{the first ray} \tag{1}$$

$$\Delta N d_2 = M \lambda : \text{the second ray} \tag{2}$$

M represents a positive integer, λ the wave length and, as mentioned before, ΔN the difference between the refractive index for the extraordinary ray and that for the ordinary ray, and $d_2$ represents the layer thickness.

The parameters in the above equations are selected to be ΔN = 0.3, λ = 0.5 μm and M = 1000, resulting in

$$d_2 \sim 1.677 \text{ mm}$$

$$\alpha = \cos^{-1} [M/(M + 1/2)] \sim 0.0316161.$$

(2) Light separating part

The edge angle $\beta$ in the light separating part of Fig. 5(a) is determined as follows according to Snell's law under the condition of $\alpha = 0.0316161$, $N_{O1} = 1.4$ and $N_{e1} = 1.7$.

$N_{O1} \sin (\beta) = N_{eff} \sin (\beta-\alpha)$, with

$$N_{eff} = N_{O1} \, N_{e1} \, / \, \sqrt{N_{e1}^2 \cos^2 ( (\Pi/2) - \alpha) + N_{O1}^2 \sin^2 ( (\Pi/2) - \alpha)}$$

$$= 1.699597$$

As a result of this calculation the following values are obtained

$$\beta \sim 0.1779348$$
$$\tan (\beta) \sim 0.1798367.$$

Practical values for the design of the prism are a prism width of 100 $\mu$m and a layer thickness $d_1 \sim 18.0$ $\mu$m.

(3) Light ray combining part

$\lambda$ and $\delta$ are obtained with respect to the second ray 505 under the condition that the refractive index for the ordinary ray is $N_{03} = 1.3$ and that for the extraordinary ray $N_{e3} = 1.7$ and $\alpha = 0.0316161$.

The following relation is obtained according to Snell's law:

$N_L \sin\delta = N_{eff} \sin(\delta-\alpha)$, wherein

$$N_L = N_{O3} \, N_{e3} \, / \, \sqrt{N_{e3}^2 \cos^2\gamma + N_{O3}^2 \sin^2\gamma} = 1.494810,$$

$$N_{eff} = N_{O3} \, N_{e3} \, / \, \sqrt{N_{e3}^2 \cos^2 (\alpha+\gamma) + N_{O3}^2 \sin^2 (\alpha+\gamma)}$$

$$= 1.443235.$$

The obtained optimum values are $\delta \sim 75° \pm 1°$ and $\gamma \sim 50° \pm 5°$. When the light ray combining part has a width of 100 $\mu$m, its layer thickness is $d_3 \sim 373$ $\mu$m. From the above results, the thickness d of the polarizer is as follows:

$$d = d_1 + d_2 + d_3$$

$$\sim 18.0 \ \mu m + 1.667 \ mm + 373 \ \mu m$$

$$\sim 2 \ mm.$$

This result shows that the polarizer is an extremely thin sheet.

**Claims**

1. A polarizing optical device comprising:

light separating means for receiving input light (500) including a first polarized light component (501) and a second polarized light component (502) the two polarized light components having their directions of polarization perpendicular to each other, and for separating the input light into a first (503) and a second (505) output light ray corresponding to said first and second polarized light components, respectively,
light polarizing rotation means made from a birefringent material and having an input side and an output side, for rotating the direction of polarization of said first output light ray (503) by 90° to produce a modified first output light ray,
and light ray combining means for receiving said modified first output light ray (503) and said second light ray (505) and outputting them with the same direction of polarization,
characterized in that
said light separating means comprises:
a first right-angled prism (509) having isotropic optical characteristics and a first refractive index of No1, and
a second right-angled prism (510) having uni-axial birefringence, a first principal refractive index with respect to the ordinary ray equal to said first refractive index No1 and a second principal refractive index Ne1 with respect to the extraordinary ray,
wherein the first and second prisms are arranged with their hypothenuse surfaces contacting each other,
wherein, when one of the two surfaces of said first prism (509) other than the hypothenuse surface is defined as a light input surface, the optical crystal axis of the second prism is parallel to the light input surface, and wherein one of the two surfaces of said second prism (510) other than the hypothenuse surface that is oposite and parallel to the light input surface forms a light output surface from which said output light rays are emitted, the input side of said polarization rotation means is in contact with said light output surface, the polarization rotation means rotating the direction of polarization of said modified first output light ray (503) by 90° while keeping the direction of polarization of said second output light ray (505) and the propagation direction of both output light rays unchanged, and
said light ray combining means comprises:
a third right-angled prism (567) having uni-axial birefringence and having its optical crystal axis in the same plane as that of said second prism (510), and
a fourth right-angled prism (568) having isotropic optical characteristics,
wherein the third and fourth prisms are arranged with their hypothenuse surfaces contacting each other and one of the two surfaces of the third prism (567) other than the hypothenuse surface is in contact with said output side of the polarization rotation means.

2. The device of claim 1 wherein said first and second output light rays have the same propagation direction upon leaving said light ray combining means.

## Patentansprüche

1. Optische Polarisationsvorrichtung, umfassend:

einen Lichttrennteil zum Empfang von Eingangslicht (500), enthaltend eine erste polarisierte Lichtkomponente (501) und eine zweite polarisierte Lichtkomponente (502), wobei die Polarisationsrichtungen der beiden polarisierten Lichtkomponenten senkrecht zueinander sind, und zur Trennung des Eingangslichts in einen ersten (503) und einen zweiten (502) Ausgangslichtstrahl entsprechend der ersten bzw. der zweiten polarisierten Lichtkomponente,
eine Lichtpolarisationseinrichtung aus einem doppelbrechenden Material mit einer Eingangsseite und einer Ausgangsseite zum Drehen der Polarisationsrichtung des ersten Ausgangslichtstrahls (503) um 90° zur Erzeugung eines modifizierten ersten Ausgangslichtstrahls,
und eine Lichtstrahlkombinationseinrichtung zum Empfang des modifizierten ersten Ausgangslichtstrahls (503) und des zweiten Lichtstrahls (505) und zu deren Ausgabe mit derselben Polarisationsrichtung,
dadurch gekennzeichnet, daß
der Lichttrennteil umfaßt:
ein erstes rechtwinkliges Prisma (509) mit isotropen optischen Eigenschaften und einer ersten Brechzahl von No1, und
ein zweites rechtwinkliges Prisma (510) mit uniaxialer Doppelbrechung, einer ersten Hauptbrechzahl in bezug auf den ordentlichen Strahl gleich der ersten Brechzahl No1 und einer zweiten Hauptbrechzahl Ne1 in bezug auf den außerordentlichen Strahl,
wobei das erste und das zweite Prisma so angeordnet sind, daß ihre Hypothenusenflächen einander berühren,
wobei, wenn eine der beiden Flächen des ersten Prismas (509) außer der Hypothenusenfläche als eine Lichteingangsfläche bezeichnet wird, die optische Kristallachse des zweiten Prismas parallel zur Lichteingangsfläche liegt, und
wobei eine der beiden Flächen des zweiten Prismas (510) außer der Hypothenusenfläche, die der Lichteingangsfläche entgegengesetzt ist und parallel zu ihr liegt, eine Lichtausgangsfläche bildet, von der die Lichtausgangsstrahlen emittiert werden,
die Eingangsseite der Polarisationsrotationseinrichtung mit der Lichtausgangsfläche im Kontakt steht, die Polarisationsrotationseinrichtung die Polarisationsrichtung des modifizierten ersten Ausgangslichtstrahls (503) um 90° dreht, während sie die Polarisationsrichtung des zweiten Ausgangslichtstrahls (505) und die Ausbreitungsrichtung beider Ausgangslichtstrahlen unverändert läßt, und
die Lichtstrahlkombinationseinrichtung umfaßt:
ein drittes rechtwinkliges Prisma (567) mit uniaxialer Doppelbrechung und ihrer optischen Kristallachse in derselben Ebene wie die des zweiten Prismas (510), und
ein viertes rechtwinkliges Prisma (568) mit isotropen optischen Eigenschaften,

wobei das dritte und das vierte Prisma so angeordnet sind, daß ihre Hypothenusenflächen einander berühren und eine der beiden Flächen des dritten Prismas (567) außer der Hypothenusenfläche mit der Ausgangsseite der Polarisationsrotationseinrichtung im Kontakt steht.

**2.** Vorrichtung nach Anspruch 1, bei der der erste und der zweite Ausgangslichtstrahl beim Verlassen der Lichtstrahlkombinationseinrichtung dieselbe Ausbreitungsrichtung haben.

**Revendications**

**1.** Dispositif optique polarisant comprenant :

un moyen de séparation de lumière pour recevoir une lumière d'entrée (500) comportant une première composante de lumière polarisée (501) et une seconde composante de lumière polarisée (502), les deux composantes de lumière polarisée ayant des directions de polarisation perpendiculaires l'une à l'autre, et pour séparer la lumière d'entrée en un premier (503) et un second (505) rayons lumineux de sortie correspondant respectivement aux première et seconde composantes de lumière polarisée,
un moyen de rotation de polarisation de lumière constitué d'un matériau biréfringent et ayant un côté d'entrée et un côté de sortie, pour faire tourner de 90° la direction de polarisation dudit premier rayon lumineux de sortie (503) afin de produire un premier rayon lumineux de sortie modifié, et
un moyen de combinaison de rayons lumineux pour recevoir le premier rayon lumineux de sortie modifié (503) et le second rayon lumineux (505) et les fournir en sortie avec la même direction de polarisation,
caractérisé en ce que
le moyen de séparation de lumière comprend :
un premier prisme à angle droit (509) ayant des caractéristiques optiques isotropes et un premier indice de réfraction égal à $N_{o1}$, et
un second prisme à angle droit (510) ayant une biréfringence uniaxe, un premier indice de réfraction par rapport au rayon ordinaire égal au premier indice de réfraction $N_{o1}$ et un second indice de réfraction principal $N_{e1}$ par rapport au rayon extraordinaire,
les premier et second prismes étant disposés de façon que leurs surfaces d'hypoténuses soient en contact mutuel,
l'axe du cristal optique du second prisme étant parallèle à la surface d'entrée de lumière, lorsque l'une des deux surfaces du premier prisme (509) autre que la surface d'hypoténuse est définie comme étant une surface d'entrée de lumière, et
l'une des deux surfaces du second prisme (510) autre que la surface d'hypoténuse, qui est opposée et parallèle à la surface d'entrée de lumière, formant une surface de sortie de lumière par laquelle les rayons lumineux de sortie sont émis,
le côté d'entrée du moyen de rotation de polarisation est en contact avec la surface de sortie de lumière, le moyen de rotation de polarisation faisant tourner de 90° la direction de polarisation du premier rayon lumineux de sortie modifié (503) tout en maintenant inchangées la direction de polarisation du second rayon lumineux de sortie (505) et la direction de propagation des deux rayons lumineux de sortie, et
le moyen de combinaison de rayons lumineux comprend :
un troisième prisme à angle droit (567) ayant une biréfringence uniaxe et dont l'axe du cristal optique est dans le même plan que celui du second prisme (510), et
un quatrième prisme à angle droit (568) ayant des caractéristiques optiques isotropes,
les troisième et quatrième prismes étant disposés de façon que leurs surfaces d'hypoténuses soient en contact l'une avec l'autre et que l'une des deux surfaces du troisième prisme (567) autre que la surface d'hypoténuse, soit en contact avec le côté de sortie du moyen de rotation de polarisation.

**2.** Dispositif selon la revendication 1, dans lequel les premier et second rayons lumineux de sortie ont des directions de propagation identiques lorsqu'ils sortent du moyen de combinaison de rayons lumineux.

FIG. 1

FIG. 2

**FIG. 3 (a)**

**FIG. 3 (b)**

FIG. 3 ( c )

FIG. 3 ( d )

FIG. 3 ( e )

FIG. 3 ( f )

FIG. 4

FIG. 5 (a)

505

503

α

d₂

FIG. 5 (b)

FIG. 5 ( c )